# EUROPEAN PATENT APPLICATION

(11) **EP 4 850 804 A1**
(43) Date of publication of application: **09.12.2026**
(21) Application number: 25748694.4
(22) Date of filing: 30.01.2025
(51) Int. Cl.: B01J 8/00, B01F 23/53, B01F 23/231, B01F 23/232, B01F 23/234, B01F 23/2373, B01F 25/43, B01F 25/52, B01F 27/051, B01F 27/86, B01F 35/51, B01F 35/53, B01J 35/58

(54) **REACTION METHOD AND REACTION DEVICE**

(30) Priority: 30.01.2024 JP 2024011665
(71) Applicant: EBARA CORPORATION, Ota-ku, Tokyo 144-8510 (JP)
(72) Inventor: HARAKAWA, Hiroaki, Tokyo 144-8510 (JP); KOMATSU, Makoto, Tokyo 144-8510 (JP); TAKEMURA, Takashi, Tokyo 144-8510 (JP)
(74) Representative: Wagner & Geyer
(86) International application number: PCT/JP2025/002879
(87) International publication number: WO 2025/164691

(57) **Abstract**

Provided is a reaction method enabling an efficient catalytic reaction to be performed. A reaction method including a step of reacting two or more kinds of raw materials with a metal-supported nonwoven fabric catalyst using a batch-type reaction device having a stirred tank.

## Description

### TECHNICAL FIELD

The present invention relates to a reaction method and a reaction device.

### BACKGROUND ART

In reactions such as oxidation reactions or reduction reactions, catalysts containing a metal catalyst supported on a carrier are in wide use. For example, in reduction reactions, catalysts containing a noble metal such as platinum or palladium supported on a (powdery or granular) carrier such as activated carbon or alumina are in use. In the fine chemical field, a solution containing a raw material compound dissolved therein and the above-described catalyst are introduced into a reaction tank and stirred with the reaction tank filled with a hydrogen gas, whereby a reduction reaction is performed.

However, in the above-described reaction method, a lot of time and energy may be spent at the time of filtering a reaction mixture to separate the catalyst therefrom after the end of the reaction. In addition, in the reaction method, the catalyst cannot be said to be efficiently functioning from the viewpoint of the reaction efficiency, and there is a case where an excessive reaction time is spent or more catalyst than necessary is used. Particularly, in the case of a granular catalyst for which a granular carrier is used, a metal catalyst distributed inside the grains is not effectively utilized in the reaction. Therefore, there is a desire for development of a reaction method enabling a more efficient catalytic reaction to be performed.

Incidentally, regarding catalysts supported on carriers, Patent Literature 1 discloses a supported catalyst having a corrugated and fragment-like shape. In addition, Patent Literature 2 discloses a catalyst product containing supported catalyst particles durably entangled inside a porous fibrillated polymer membrane. In addition, Patent Literature 3 discloses a metal-supported nonwoven fabric including a nonwoven fabric including polyolefin fibers or PET fibers and metal particles.

### CITATION LIST

### PATENT LITERATURE

PTL 1: Japanese Patent Laid-Open No. 2016-190226
PTL 2: Japanese Patent Laid-Open No. 2023-59875
PTL 3: Japanese Patent No. 7113866

### SUMMARY OF INVENTION

### TECHNICAL PROBLEM

An object of the present invention is to provide a reaction method enabling an efficient catalytic reaction to be performed and a reaction device that is used in the same method.

### SOLUTION TO PROBLEM

The present invention includes the following embodiments.
[1] A reaction method including a step of reacting two or more kinds of raw materials with a metal-supported nonwoven fabric catalyst using a batch-type reaction device having a stirred tank.
[2] The method according to [1], wherein the metal-supported nonwoven fabric catalyst includes a nonwoven fabric including polyolefin fibers or PET fibers and metal particles,
   the nonwoven fabric has a grafted side chain bonded thereto, the grafted side chain composed of polyvinyl pyrrolidone, a polyacrylic acid, or a polymer having a functional group having an unshared electron pair, and
   the metal particles are supported on the grafted side chain through a pyrrolidone group of the polyvinyl pyrrolidone, a carboxy group of the polyacrylic acid, or the functional group having an unshared electron pair.
[3] The method according to [2], wherein a metal of the metal particles is Pd, Pt, Au, Ag, Rh, Ru, Ir, Os, Cu, Ni, or an alloy containing at least one of these metals.
[4] The method according to [2] or [3], wherein the functional group having an unshared electron pair is an amino group, a carboxy group, or a hydroxy group.
[5] The method according to any one of [1] to [4], wherein the metal-supported nonwoven fabric catalyst is present in a fragment shape without being fixed to an inside of the stirred tank.
[6] The method according to any one of [1] to [4], wherein the stirred tank has a stirring blade in the tank, and the metal-supported nonwoven fabric catalyst is provided on at least a part of a surface of the stirring blade.
[7] The method according to any one of [1] to [4], wherein the stirred tank has a stirring blade in the tank, and the stirring blade is composed of the metal-supported nonwoven fabric catalyst.
[8] The method according to any one of [1] to [4], wherein the stirred tank has a baffle in the tank, and the metal-supported nonwoven fabric catalyst is provided on at least a part of a surface of the baffle.
[9] The method according to any one of [1] to [4], wherein the metal-supported nonwoven fabric catalyst is provided on at least a part of an inner wall surface of the stirred tank.
[10] The method according to any one of [1] to [4], wherein the metal-supported nonwoven fabric catalyst is present in a spherical or tubular shape without being fixed to an inside of the stirred tank.
[11] The method according to any one of [1] to [4], wherein the metal-supported nonwoven fabric catalyst is present in a state of being fixed to an inside of the stirred tank in a tubular shape.
[12] The method according to any one of [1] to [4], wherein the batch-type reaction device further has a column connected to the stirred tank,
   the column is filled with the metal-supported nonwoven fabric catalyst, and
   the method includes a step of flowing the raw materials in the stirred tank through the column and circulating the raw materials back to the stirred tank.
[13] The method according to any one of [1] to [12], wherein the two or more kinds of raw materials contain a gas raw material and a liquid raw material.
[14] The method according to [13], wherein the gas raw material contains hydrogen.
[15] The method according to [14], wherein the liquid raw material contains at least one selected from the group consisting of an unsaturated compound, an azide compound, a nitro compound, a carbonyl compound, a halogen compound, an amine protected with a benzyloxycarbonyl group, an alcohol protected with a benzyloxycarbonyl group, a phenol compound protected with a benzyloxycarbonyl group, a benzyl ester, an amine protected with a benzyl group, an alcohol protected with a benzyl group, a phenol compound protected with a benzyl group, and an epoxide.
[16] The method according to [13], wherein the gas raw material contains oxygen.
[17] The method according to [16], wherein the liquid raw material contains at least one selected from the group consisting of an unsaturated compound, an alcohol and an aldehyde.
[18] The method according to any one of [13] to [17], wherein the stirred tank has a stirring blade in the tank, and
   the method further includes a step of rotating the stirring blade with at least a part of the stirring blade in contact with a gas phase containing the gas raw material.
[19] The method according to any one of [13] to [18], wherein the batch-type reaction device further has an inline mixer connected to the stirred tank, and
   the method further includes a step of flowing the gas raw material and the liquid raw material in the stirred tank through the inline mixer, converting the gas raw material into fine bubbles, and circulating the raw materials back to the stirred tank.
[20] A batch-type reaction device having a stirred tank, wherein a metal-supported nonwoven fabric catalyst is provided on at least a part of a surface of a member provided in the stirred tank.

### ADVANTAGEOUS EFFECTS OF INVENTION

According to the present invention, it is possible to provide a reaction method enabling an efficient catalytic reaction to be performed and a reaction device that is used in the same method.

### BRIEF DESCRIPTION OF DRAWINGS

Fig. 1 is a schematic view showing one example of a batch-type reaction device that is used in a method according to a first embodiment.
Fig. 2 is a schematic view showing one example of a batch-type reaction device that is used in a method according to a third embodiment.
Fig. 3 is a schematic view showing one example of a batch-type reaction device that is used in a method according to a fourth embodiment.
Fig. 4 is a schematic view showing one example of a batch-type reaction device that is used in a method according to a fifth embodiment.
Fig. 5 is a schematic view showing another example of the batch-type reaction device that is used in a method according to the fifth embodiment.
Fig. 6 is a schematic view showing one example of a batch-type reaction device that is used in a method according to a sixth embodiment.
Fig. 7 is a schematic view showing one example of a batch-type reaction device that is used in a method according to a seventh embodiment.
Fig. 8 is a schematic view showing another example of the batch-type reaction device that is used in a method according to the seventh embodiment.
Fig. 9 is a schematic view showing one example of a batch-type reaction device that is used in a method according to an eighth embodiment.
Fig. 10 is a schematic view showing one example of a batch-type reaction device that is used in a method according to a ninth embodiment.
Fig. 11 is a schematic view showing another example of the batch-type reaction device that is used in a method according to the ninth embodiment.
Fig. 12 is a schematic view showing one example of a batch-type reaction device that is used in a method according to a tenth embodiment.

### DESCRIPTION OF EMBODIMENTS

### [Reaction method]

A reaction method according to the present embodiment includes a step of reacting two or more kinds of raw materials with a metal-supported nonwoven fabric catalyst using a batch-type reaction device having a stirred tank. In the method according to the present embodiment, since a reaction is performed in a batch-type reaction device using a metal-supported nonwoven fabric catalyst containing a metal supported on a nonwoven fabric, it is easier to recover the catalyst after the reaction than metal-supported catalysts containing a metal supported on a granular carrier, and it is possible to recover the catalyst within a short period of time. In addition, in the metal-supported nonwoven fabric catalyst, since the metal is in a state of being highly dispersed on the nonwoven fabric, the reaction efficiency is high, and the amount of the metal supported can be reduced. That is, in the method according to the present embodiment, in a batch-type reaction, it is possible to shorten the operation time taken for the reaction (a reaction time + a filtration time) while achieving a reaction rate or yield that is equal to or higher than those of conventional methods and to efficiently perform a catalytic reaction. In addition, detachment or leaching of the metal from the metal-supported nonwoven fabric catalyst during the reaction is curbed, and it is thus possible to recover the metal-supported nonwoven fabric catalyst after the reaction and to reuse the metal-supported nonwoven fabric catalyst for another reaction. Furthermore, the batch-type reaction device is widely used as a chemical reaction device and thus makes it possible to easily perform the method according to the present embodiment using existing facilities. Examples of the kind of the reaction in the reaction method according to the present embodiment include reduction reaction, oxidation reactions. Hereinafter, the detail of the reaction method according to the present embodiment will be described, but the reaction method according to the present embodiment is not limited thereto.

### (Metal-supported nonwoven fabric catalyst)

The metal-supported nonwoven fabric catalyst that is used in the method according to the present embodiment is not particularly limited as long as the metal, which is a catalyst component, is supported on the nonwoven fabric, which is a carrier. However, from the viewpoint of enabling the catalytic reaction to be more efficiently performed, it is preferable that the metal-supported nonwoven fabric catalyst includes a nonwoven fabric including polyolefin fibers or PET fibers and metal particles, the nonwoven fabric has a grafted side chain bonded thereto, the grafted side chain composed of polyvinyl pyrrolidone, a polyacrylic acid, or a polymer having a functional group having an unshared electron pair, and the metal particles are supported on the grafted side chain through a pyrrolidone group of the polyvinyl pyrrolidone, a carboxy group of the polyacrylic acid, or the functional group having an unshared electron pair. For example, the metal particles can be supported on the grafted side chain by a chemical bond (for example, a coordinate bond) to a nitrogen atom in the pyrrolidone group, an oxygen atom in the carboxy group, or an atom having the unshared electron pair in the functional group.

In the metal-supported nonwoven fabric catalyst, since the metal particles are supported through the pyrrolidone group, the carboxy group, or the functional group having an unshared electron pair in polyvinyl pyrrolidone, a polyacrylic acid, or a polymer having a functional group having an unshared electron pair, which is the grafted side chain bonded to the nonwoven fabric, it is possible uniformly support (fix) metal particles having small particle sizes on the nonwoven fabric in a highly dispersed state. This increases the contact efficiency between a reaction substrate and a metal catalyst and makes it possible to more efficiently perform the catalytic reaction. In addition, the amount of the metal catalyst supported can be reduced. Furthermore, since the metal particles are supported on the nonwoven fabric, it is possible to easily separate the catalyst from a reaction mixture after the reaction in the batch-type reaction device.

### <Nonwoven fabric>

The nonwoven fabric, which is the carrier, may include polyolefin fibers or PET (polyethylene terephthalate) fibers. The fact that the fiber material constituting the nonwoven fabric is a polyolefin or PET makes it easy for radicals to be generated when the nonwoven fabric is irradiated with radiation in graft polymerization, which will be described below. Examples of the polyolefin include polyethylene, polypropylene, copolymers of ethylene and chlorotrifluoroethylene (ECTFE).

The basis weight of the nonwoven fabric is not particularly limited, but is preferably 50 to 500 g/m² and more preferably 55 to 300 g/m². When the basis weight is 50 g/m² or more, durability as a catalyst improves. In addition, when the basis weight is 500 g/m² or less, the graft polymerization with radiation can be sufficiently performed.

### <Metal particles>

A metal of the metal particles is not particularly limited, but can be a metal that acts as a catalyst. The metal can be, for example, a transition metal such as a noble metal. Specific examples thereof include Pd, Pt, Au, Ag, Rh, Ru, Ir, Os, Cu, Ni, and alloys containing at least one of these metals.

The average particle diameter (D₅₀) of the metal particles is preferably 100 nm or less from the viewpoint of an increase in the contact efficiency between the reaction substrate and the metal catalyst in a case where the metal particles are used as the catalyst and improvement in catalytic activity. The average particle diameter (D₅₀) is more preferably 2 to 50 nm and still more preferably 2 to 20 nm. The average particle diameter (D₅₀) is a value obtained by measuring the particle diameters of 50 to several hundreds of metal particles in a 500 nm × 500 nm range by a high-angle annular dark field scanning transmission electron microscopy (HAADF-STEM) method and calculating the average thereof.

The amount of the metal particles supported in the metal-supported nonwoven fabric catalyst may be 0.05 to 5 mass%, may be 0.1 to 3 mass%, may be 0.2 to 1 mass%, or may be 0.3 to 0.7 mass%. The amount of the metal particles supported in the metal-supported nonwoven fabric catalyst can be measured by the following method. Fragments having predetermined sizes are cut out from the metal-supported nonwoven fabric catalyst, and the masses thereof are measured. The fragments are immersed in 1 mol/L of nitric acid in an Erlenmeyer flask with a stopper and stirred for 24 hours or longer. This supernatant liquid is diluted 50 times with 0.1 mol/L of nitric acid. The metal concentration of this 50-fold diluted solution is measured by ICP-MS. The total amount of the metal leaching from the cut-out nonwoven fabric is calculated from a measurement result and divided by the mass of the nonwoven fabric, thereby obtaining the metal content per mass of the nonwoven fabric. The measurement is performed five times, and an average value thereof is regarded as the amount of the metal particles supported in the metal-supported nonwoven fabric catalyst.

### <Grafted side chain>

The nonwoven fabric has a grafted side chain bonded thereto, the grafted side chain composed of polyvinyl pyrrolidone, a polyacrylic acid, or a polymer having a functional group having an unshared electron pair. The "grafted side chain" as used herein refers to a side chain formed by graft-polymerizing a monomer (a monomer having N-vinyl-2-pyrrolidone, an acrylic acid, or a functional group having an unshared electron pair) to the surfaces of the fibers of the nonwoven fabric. The metal particles are supported on the grafted side chain through the pyrrolidone group, the carboxy group, or the functional group having an unshared electron pair. For example, the metal particles can be supported on the grafted side chain by a chemical bond to a nitrogen atom in the pyrrolidone group, an oxygen atom in the carboxy group, or an atom having the unshared electron pair in the functional group. Examples of the chemical bond include a coordinate bond, an ionic bond, a hydrogen bond. The fact that the metal particles are supported on the grafted side chain through the pyrrolidone group of the polyvinyl pyrrolidone, the carboxy group of the polyacrylic acid, or the functional group having an unshared electron pair can be determined by observation with a transmission electron microscope (TEM).

As the polymer constituting the grafted side chain, polyvinyl pyrrolidone, a polyacrylic acid, or a polymer having a functional group having an unshared electron pair is used from the viewpoint of enabling the metal particles to be supported on the grafted side chain at a large number of points. In particular, polyvinyl pyrrolidone has a weak coordination capability toward the metal of the metal particles, but is capable of supporting and fixing the metal particles at a larger number of points with a plurality of pyrrolidone groups and is capable of sufficiently curbing the detachment of the metal particles, which is preferable.

The functional group having an unshared electron pair is a functional group in which at least one of the atoms constituting the functional group has an unshared electron pair, and examples thereof include an amino group, a carboxy group, a hydroxy group. Specific examples of the polymer having the functional group having an unshared electron pair include styrene-based polymers having a primary to tertiary amino group, methyl polymethacrylate.

The grafted side chain is formed by graft-polymerizing the monomer to the nonwoven fabric, and at this time, a radiation graft polymerization method can be suitably used. The radiation graft polymerization method refers to a method in which an organic polymer base material (nonwoven fabric) is irradiated with radiation to generate a radical, and a monomer is reacted with the radical, whereby a desired grafted side chain can be introduced onto a polymer main chain of the base material. In the method, it is possible to freely control the number and lengths of the graft sided chains and to introduce the grafted side chains into existing polymer materials of a variety of shapes.

Examples of the radiation that can be used in the radiation graft polymerization method may include γ rays, electron beams, ultraviolet rays. Among these, γ rays or electron beams are suitable as the radiation that is used in the present embodiment. As the radiation graft polymerization method, there are a pre-irradiation graft polymerization method in which a nonwoven fabric is irradiated with radiation in advance and is then brought into contact and reacted with a monomer and a concurrent irradiation graft polymerization method in which a nonwoven fabric and a monomer are present together and irradiated with radiation. In addition, examples thereof include a liquid phase graft polymerization method in which a nonwoven fabric is polymerized while immersed in a monomer solution, a gas phase graft polymerization method in which a nonwoven fabric is brought into contact with the vapor of a monomer and polymerized, an impregnated gas phase graft polymerization method in which a nonwoven fabric is immersed in a monomer solution, then, taken out from the monomer solution, and reacted in a gas phase. In the present embodiment, any of the methods can be used.

Since the nonwoven fabric that is used as the base material in the present embodiment easily holds the monomer solution, the impregnated gas phase graft polymerization method is suitable. Even when the nonwoven fabric is introduced into the grafted side chain by the radiation graft polymerization method, there is no significant decrease in mechanical strength, and it is thus possible to introduce a large amount of the grafted side chain.

The amount of the grafted side chain bonding to the nonwoven fabric is preferably 10 to 200 parts by mass relative to 100 parts by mass of the nonwoven fabric. When the amount is 10 parts by mass or more, it is possible to sufficiently support the metal particles on the grafted side chain. In addition, when the amount is 200 parts by mass or less, it is possible to curb the deformation of the nonwoven fabric or the cracking of the fibers and to maintain ease of handling. In addition, it is possible to prevent the detachment of the catalyst metal particles resulting from the fibers being made to be brittle. The amount is a value measured by determining the mass of the nonwoven fabric before the graft polymerization reaction and the mass of the nonwoven fabric after the graft polymerization reaction.

### (Method for producing metal-supported nonwoven fabric catalyst)

The metal-supported nonwoven fabric catalyst can be produced by, for example, a method including the following steps: a step of irradiating a nonwoven fabric including polyolefin fibers or PET fibers with radiation and graft-polymerizing a monomer having N-vinyl-2-pyrrolidone, an acrylic acid, or a functional group having an unshared electron pair to the nonwoven fabric (hereinafter also referred to as a graft polymerization step); and a step of immersing the graft-polymerized nonwoven fabric in a solution containing a metal salt or a metal oxide and a solvent (hereinafter also referred to as a solution immersion step). The method may further include a step of adding a reducing agent to the solution having the nonwoven fabric immersed therein (hereinafter also referred to as a reducing agent addition step). According to the method, the metal-supported nonwoven fabric catalyst can be suitably produced.

### < Graft polymerization step>

In the present step, a nonwoven fabric including polyolefin fibers or PET fibers is irradiated with radiation to generate radicals in the polyolefin or PET, and the radicals and a monomer having N-vinyl-2-pyrrolidone, an acrylic acid, or a functional group having an unshared electron pair are reacted together to graft-polymerize N-vinyl-2-pyrrolidone, the acrylic acid, or the monomer. The fibers constituting the nonwoven fabric are preferably composed of polyolefin from the viewpoint of easy generation of the radicals by radiation irradiation. The graft polymerization can be performed by the above-described radiation graft polymerization method.

### <Solution immersion step>

In the present step, the nonwoven fabric after the graft polymerization step is immersed in a solution containing a metal salt or a metal oxide and a solvent. Examples of the metal salt and the metal oxide include salts containing the above-described metal of the metal particle as a cation and oxides of the metal, respectively. Specific examples of the metal include Pd, Pt, Au, Ag, Rh, Ru, Ir, Os, Cu, Ni. Examples of the metal salts include chlorides, hydrochlorides, nitrate, perchlorate. One of these may be used or two or more thereof may be jointly used. Examples of the solvent include water, alkaline solutions. The concentration of the metal salt or metal oxide in the solution is preferably 3 to 20 mmol/L.

In a case where palladium chloride is used as the metal salt, the solution preferably contains palladium chloride as the metal salt, water as the solvent, and sodium chloride. The addition of sodium chloride makes it possible to more uniformly form and support the fine particles of the metal.

### <Reducing agent addition step>

In order to reduce the metal of the metal salt or metal oxide, a reducing agent may be further added to the solution having the nonwoven fabric after the solution immersion step immersed therein. Examples of the reducing agent include methanol, ethanol, propanol, polyol, sodium borohydride, hydrazine. One of these reducing agent may be used or two or more thereof may be jointly used. In order to promote reduction, the solution having the nonwoven fabric immersed therein can be heated. The fact that the metal of the metal salt or metal oxide has been reduced can be confirmed by, for example, XPS (X-ray Photoelectron Spectroscopy) or the like.

### (Raw material)

In the method according to the present embodiment, two or more kinds of raw materials are used as a raw material. Particularly, in the method according to the present embodiment, the raw material preferably contain a gas raw material and a liquid raw material. In a case where the gas raw material and the liquid raw material are reacted with each other using a solid catalyst, three phases, a gas phase (gas raw material), a liquid phase (gas raw material), and a solid phase (solid catalyst) come into contact with one another, whereby a reaction progresses for the first time. In the method according to the present embodiment, the gas raw material and the liquid raw material are reacted with the metal-supported nonwoven fabric catalyst under stirring in the stirred tank of the batch-type reaction device, and it is thus possible for the three phases to sufficiently come into contact with one another and to make the reaction efficiently progress.

"Gas raw material" in the present embodiment indicates a raw material that is gas at normal temperature (23°C) and normal pressure (1 atm). Examples of the "gas raw material" include a reaction substrate (gas) diluted with a dilution gas and the reaction substrate (gas) itself. Examples of the dilution gas include nitrogen, argon. One of these dilution gases may be used or two or more thereof may be jointly used. In a case where the "gas raw material" contains the dilution gas, the amount of the reaction substrate (gas) in the "gas raw material" can be, for example, 50 vol% or more or 80 vol% or more.

"Liquid raw material" in the present embodiment indicates a raw material that is liquid at normal temperature (23°C) and normal pressure (1 atm). Examples of the "liquid raw material" include a reaction substrate (solid or liquid) dissolved in a solvent and the reaction substrate (liquid) itself. Examples of the solvent include alcohols such as methanol, ethanol, and 2-propanol, mixtures of the alcohol and water, ethyl acetate; toluene. One of these solvents may be used or two or more thereof may be jointly used. In a case where the "liquid raw material" contains the solvent, the amount of the reaction substrate (solid or liquid) in the "liquid raw material" can be, for example, 50 mass% or more or 80 mass% or more.

Examples of the reaction substrate that is contained in the gas raw material include hydrogen, oxygen. One of these reaction substrates may be used or two or more thereof may be jointly used.

In a case where the gas raw material contains hydrogen or is composed of hydrogen, it is possible to perform a reduction reaction by the method according to the present embodiment. At this time, the liquid raw material may contain, for example, unsaturated compounds (an alkene and an alkyne), an azide compound, a nitro compound, a carbonyl compound, a halogen compound, an amine protected with a benzyloxycarbonyl group, an alcohol protected with a benzyloxycarbonyl group, a phenol compound protected with a benzyloxycarbonyl group, a benzyl ester, an amine protected with a benzyl group, an alcohol protected with a benzyl group, a phenol compound protected with a benzyl group, an epoxide as the reaction substrate. The liquid raw material may contain one of these reaction substrates, or two or more thereof. In the method according to the present embodiment, when the hydrogen that is contained in the gas raw material and the reaction substrate that is contained in the liquid raw material are reacted with each other, the reaction temperature can be, for example, room temperature (23°C) to 100°C while also depending on the kind of the reaction substrate. In addition, the reaction may be performed under normal pressure or under pressure.

In a case where the gas raw material contains oxygen or is composed of oxygen, it is possible to perform an oxidation reaction by the method according to the present embodiment. At this time, the liquid raw material may contain, for example, unsaturated compounds (an alkene and an alkyne), an alcohol, an aldehyde as the reaction substrate. The liquid raw material may contain one of these reaction substrates, or two or more thereof. The reaction may be performed under normal pressure or under pressure.

### (First embodiment)

In the present embodiment, the stirred tank of the batch-type reaction device has a stirring blade in the tank, and the metal-supported nonwoven fabric catalyst is provided on at least a part of a surface of the stirring blade. When the metal-supported nonwoven fabric catalyst is provided on the surface of the stirring blade, it is possible to sufficiently bring the metal-supported nonwoven fabric catalyst and the raw material into contact with each other and to easily separate the catalyst after the reaction.

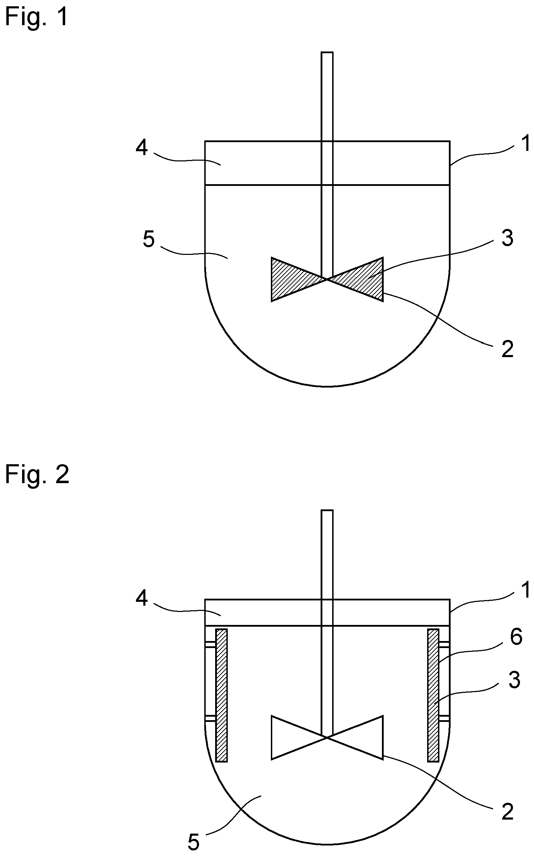

One example of the batch-type reaction device that is used in the method according to the present embodiment is shown in Fig. 1. A stirred tank 1 shown in Fig. 1 has a stirring blade 2, a gas raw material 4, and a liquid raw material 5 in the tank. The shape of the stirring blade 2 is not particularly limited, and examples thereof include a propeller shape, a stripe shape. The metal-supported nonwoven fabric catalyst 3 is provided on the surface of the stirring blade 2. In Fig. 1, the metal-supported nonwoven fabric catalyst 3 is provided on the entire surface of the stirring blade 2, but the metal-supported nonwoven fabric catalyst 3 may be provided on a part of the surface of the stirring blade 2. In a case where the metal-supported nonwoven fabric catalyst 3 is provided on a part of the surface of the stirring blade 2, the metal-supported nonwoven fabric catalyst 3 is preferably provided on 50% or more of the area of the surface of the stirring blade 2, and the metal-supported nonwoven fabric catalyst 3 is more preferably provided on 80% or more of the area of the surface of the stirring blade 2. The area of the surface of the stirring blade 2 indicates the surface area of the stirring blade 2 alone except the shaft portion. In addition, one layer of the metal-supported nonwoven fabric catalyst 3 may be laminated on the surface of the stirring blade 2 or two or more layers thereof may be laminated thereon.

As a method for providing the metal-supported nonwoven fabric catalyst on at least a part of the surface of the stirring blade, for example, a method in which the metal-supported nonwoven fabric catalyst is pasted onto at least a part of the surface of the stirring blade with an adhesive or the like can be exemplified. In addition, a part of the stirring blade may be hollowed out, and the metal-supported nonwoven fabric catalyst may be pasted so as to cover the hollowed-out portion. Examples of the shape of the metal-supported nonwoven fabric catalyst being pasted include a sheet shape, a pleated shape. Examples of the pleated shape include an accordion shape, a side pleat shape, a box pleat shape, a semi-circular shape, a crystal shape, a majolica shape. When the metal-supported nonwoven fabric catalyst has a pleated shape, the contact area between the raw material and the metal-supported nonwoven fabric catalyst during stirring increases, and the reaction efficiency further improves.

### (Second embodiment)

In the present embodiment, the stirred tank of the batch-type reaction device has a stirring blade in the tank, and the stirring blade is composed of the metal-supported nonwoven fabric catalyst. That is, the stirring blade is composed of the metal-supported nonwoven fabric catalyst, and the metal-supported nonwoven fabric catalyst also functions as a stirring blade. When the stirring blade is composed of the metal-supported nonwoven fabric catalyst, it is possible to sufficiently bring the metal-supported nonwoven fabric catalyst and the raw material into contact with each other and to easily separate the catalyst after the reaction.

In order to make the metal-supported nonwoven fabric catalyst sufficiently function as a stirring blade, the metal-supported nonwoven fabric catalyst preferably has the pleated shape. When the metal-supported nonwoven fabric catalyst has the pleated shape, the rigidity of the metal-supported nonwoven fabric catalyst improves, and the raw material can be sufficiently mixed when stirred. The stirring blade may be composed of one layer of the metal-supported nonwoven fabric catalyst or two or more layers of the metal-supported nonwoven fabric catalyst.

### (Third embodiment)

In the present embodiment, the stirred tank of the batch-type reaction device has a baffle in the tank, and the metal-supported nonwoven fabric catalyst is provided on at least a part of a surface of the baffle. "Baffle" is also referred to as a baffle plate. In a case where the stirring blade has been rotated, only a horizontal flow is generated, but the baffle provided is capable of generating a vertical flow as well, which makes it possible to improve the mixing performance. In the present embodiment, the metal-supported nonwoven fabric catalyst is provided on the surface of the baffle, whereby it is possible to sufficiently bring the metal-supported nonwoven fabric catalyst and the raw material into contact with each other and to easily separate the catalyst after the reaction.

One example of the batch-type reaction device that is used in the method according to the present embodiment is shown in Fig. 2. The stirred tank 1 shown in Fig. 2 has the stirring blade 2, the gas raw material 4, and the liquid raw material 5 in the tank. In addition, a baffle 6 is provided on the inner wall of the stirred tank 1 and the metal-supported nonwoven fabric catalyst 3 is provided on the surface of the baffle 6. In Fig. 2, the metal-supported nonwoven fabric catalyst 3 is provided on the entire surface of the baffle 6, but the metal-supported nonwoven fabric catalyst 3 may be provided on a part of the surface of the baffle 6. In a case where the metal-supported nonwoven fabric catalyst 3 is provided on a part of the surface of the baffle 6, the metal-supported nonwoven fabric catalyst 3 is preferably provided on 50% or more of the area of the surface of the baffle 6, and the metal-supported nonwoven fabric catalyst 3 is more preferably provided on 80% or more of the area of the surface of the baffle 6. In addition, one layer of the metal-supported nonwoven fabric catalyst 3 may be laminated on the surface of the baffle 6 or two or more layers thereof may be laminated thereon. As a method for providing the metal-supported nonwoven fabric catalyst 3 on at least a part of the surface of the baffle 6, the same method as in the first embodiment can be used.

The shape of the baffle 6 is not particularly limited and may be, for example, a flat shape or a cylindrical shape. The number of the baffles 6 provided in the stirred tank 1 is not particularly limited and can be, for example, two to eight. In a case where a plurality of the baffles 6 is provided in the stirred tank 1, the baffles 6 can be provided at equal intervals along the inner wall of the stirred tank 1.

### (Fourth embodiment)

In the present embodiment, the metal-supported nonwoven fabric catalyst is provided on at least a part of an inner wall surface of the stirred tank. In the present embodiment, when the metal-supported nonwoven fabric catalyst is provided on the inner wall surface of the stirred tank, it is possible to sufficiently bring the metal-supported nonwoven fabric catalyst and the raw material into contact with each other and to easily separate the catalyst after the reaction.

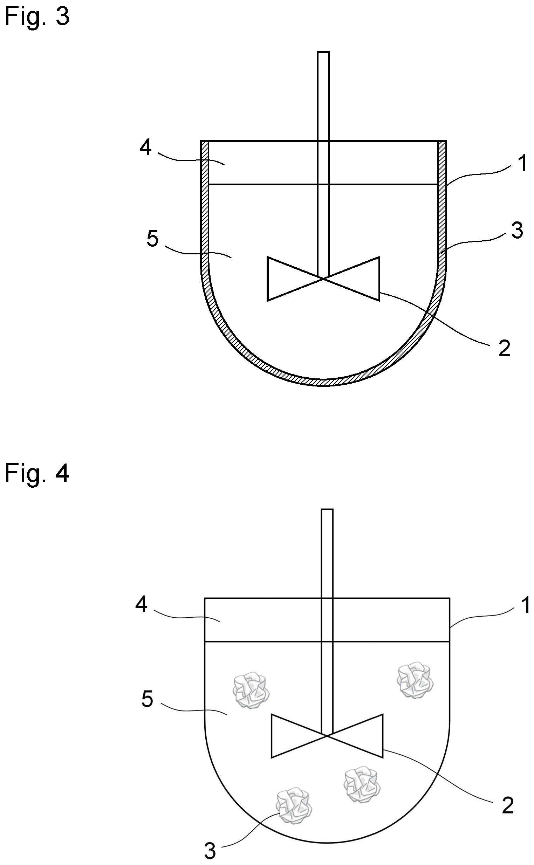

One example of the batch-type reaction device that is used in the method according to the present embodiment is shown in Fig. 3. The stirred tank 1 shown in Fig. 3 has the stirring blade 2, the gas raw material 4, and the liquid raw material 5 in the tank. In addition, the metal-supported nonwoven fabric catalyst 3 is provided on the inner wall surface of the stirred tank 1. In Fig. 3, the metal-supported nonwoven fabric catalyst 3 is provided on the entire inner wall surface of the stirred tank 1, but the metal-supported nonwoven fabric catalyst 3 may be provided on a part of the inner wall surface of the stirred tank 1. In a case where the metal-supported nonwoven fabric catalyst 3 is provided on a part of the inner wall surface of the stirred tank 1, the metal-supported nonwoven fabric catalyst 3 is preferably provided on 50% or more of the area of the inner wall surface of the stirred tank 1, and the metal-supported nonwoven fabric catalyst 3 is more preferably provided on 80% or more of the area of the inner wall surface of the stirred tank 1. In addition, one layer of the metal-supported nonwoven fabric catalyst 3 may be laminated on the inner wall surface of the stirred tank 1 or two or more layers thereof may be laminated thereon. As a method for providing the metal-supported nonwoven fabric catalyst 3 on at least a part of the inner wall surface of the stirred tank 1, the same method as in the first embodiment can be used.

### (Fifth embodiment)

In the present embodiment, the metal-supported nonwoven fabric catalyst is present in a spherical or tubular shape without being fixed to an inside of the stirred tank. In the present embodiment, the metal-supported nonwoven fabric catalyst having a spherical or tubular shape is introduced into the stirred tank without being fixed thereto, it is possible to sufficiently bring the metal-supported nonwoven fabric catalyst and the raw material into contact with each other during stirring and to easily separate the catalyst after the reaction.

One example of the batch-type reaction device that is used in the method according to the present embodiment is shown in Fig. 4. The stirred tank 1 shown in Fig. 4 has the stirring blade 2, the gas raw material 4, and the liquid raw material 5 in the tank. In addition, in the liquid raw material 5 in the stirred tank 1, the spherical metal-supported nonwoven fabric catalysts 3 are disposed in the stirred tank 1 without being fixed thereto. That is, the spherical metal-supported nonwoven fabric catalysts 3 are floating or have sunk in the liquid raw material 5. The number of the spherical metal-supported nonwoven fabric catalysts 3 disposed in the stirred tank 1 may be one or two or more. In a case where a plurality of the spherical metal-supported nonwoven fabric catalysts 3 is disposed in the stirred tank 1, the plurality of spherical metal-supported nonwoven fabric catalysts 3 may be put into one net and disposed in the stirred tank 1. The spherical metal-supported nonwoven fabric catalyst 3 can be obtained by rolling a sheet-like metal-supported nonwoven fabric catalyst into a spherical shape. For example, the spherical metal-supported nonwoven fabric catalyst can be obtained by a method in which a sheet-like metal-supported nonwoven fabric catalyst is formed into a spherical shape by welding or a sheet-like metal-supported nonwoven fabric catalyst is fastened with a wire or the like. In addition, the spherical metal-supported nonwoven fabric catalyst 3 may be made to easily float or sink in the liquid raw material 5 by putting an appropriate weight into the central portion of the spherical metal-supported nonwoven fabric catalyst 3 (the wire is also capable of functioning as the weight). In the present embodiment, "spherical shape" may be a substantially spherical shape appropriately rolled.

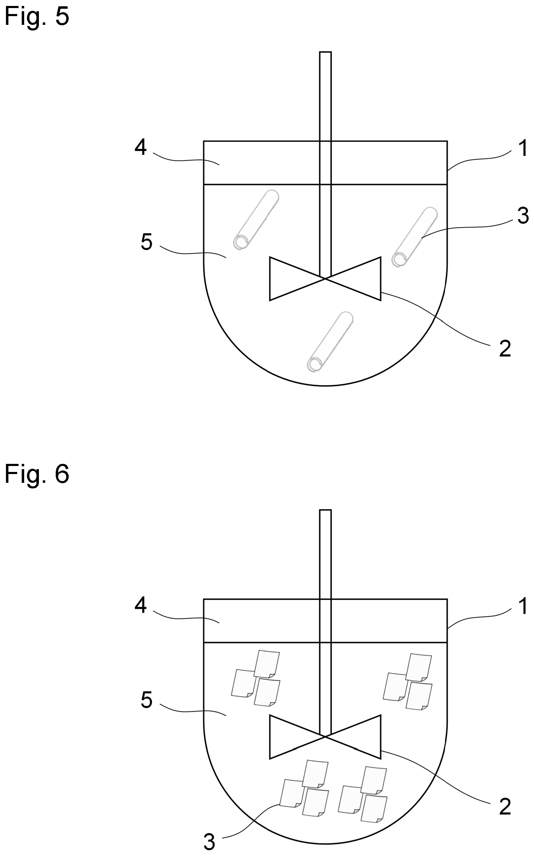

Another example of the batch-type reaction device that is used in the method according to the present embodiment is shown in Fig. 5. The stirred tank 1 shown in Fig. 5 is the same as that in Fig. 4 except that tubular metal-supported nonwoven fabric catalyst 3 are disposed in the stirred tank 1 without being fixed thereto instead of the spherical metal-supported nonwoven fabric catalysts. The number of the tubular metal-supported nonwoven fabric catalysts 3 disposed in the stirred tank 1 may be one or two or more. In a case where a plurality of the tubular metal-supported nonwoven fabric catalysts 3 is disposed in the stirred tank 1, the plurality of tubular metal-supported nonwoven fabric catalysts 3 may be put into one net and disposed in the stirred tank 1. The tubular metal-supported nonwoven fabric catalyst 3 can be obtained by rolling a sheet-like metal-supported nonwoven fabric catalyst into a tubular shape. For example, the tubular metal-supported nonwoven fabric catalyst can be obtained by a method in which a sheet-like metal-supported nonwoven fabric catalyst is formed into a tubular shape by welding or a sheet-like metal-supported nonwoven fabric catalyst is fastened with a wire or the like. In addition, the tubular metal-supported nonwoven fabric catalyst 3 may be made to easily float or sink in the liquid raw material 5 by putting an appropriate weight into the core portion of the tubular metal-supported nonwoven fabric catalyst 3 (the wire is also capable of functioning as the weight). In the present embodiment, "tubular shape" may be a substantially tubular shape rolled into a tubular shape to some extent.

### (Sixth embodiment)

In the present embodiment, the metal-supported nonwoven fabric catalyst is present in a fragment shape without being fixed to an inside of the stirred tank. In the present embodiment, the metal-supported nonwoven fabric catalyst having a fragment-like shape is introduced into the stirred tank without being fixed thereto, it is thus possible to sufficiently bring the metal-supported nonwoven fabric catalyst and the raw material into contact with each other during stirring and to easily separate the catalyst after the reaction. In the present embodiment, "fragment" can be, for example, a fragment having a maximum overall length of 10 mm or more and can also be a fragment having a maximum overall length of 10 to 300 mm. In addition, "maximum overall length" refers to the maximum length of the overall lengths of the fragment, and in the case of, for example, a rectangle, the diagonal becomes the maximum overall length.

One example of the batch-type reaction device that is used in the method according to the present embodiment is shown in Fig. 6. The stirred tank 1 shown in Fig. 6 has the stirring blade 2, the gas raw material 4, and the liquid raw material 5 in the tank. In addition, in the liquid raw material 5 in the stirred tank 1, the fragment-like metal-supported nonwoven fabric catalysts 3 are disposed in the stirred tank 1 without being fixed thereto. That is, the fragment-like metal-supported nonwoven fabric catalysts 3 are floating or have sunk in the liquid raw material 5. The number of the fragment-like metal-supported nonwoven fabric catalysts 3 disposed in the stirred tank 1 may be one or two or more. The fragment-like metal-supported nonwoven fabric catalysts 3 can have, for example, a triangular shape, a rectangular shape, a polygonal shape, a circular shape, an elliptical shape, a torn free-form shape, or the like. The fragment-like metal-supported nonwoven fabric catalyst 3 can be obtained by, for example, cutting a large sheet-like metal-supported nonwoven fabric catalyst into desired size and shape.

### (Seventh embodiment)

In the present embodiment, the metal-supported nonwoven fabric catalyst is present in a state of being fixed to an inside of the stirred tank in a tubular shape. In the present embodiment, the metal-supported nonwoven fabric catalyst is disposed in a state of being fixed to the inside of the stirred tank in a tubular shape, whereby it is possible to sufficiently bring the metal-supported nonwoven fabric catalyst and the raw material into contact with each other and to easily separate the catalyst after the reaction.

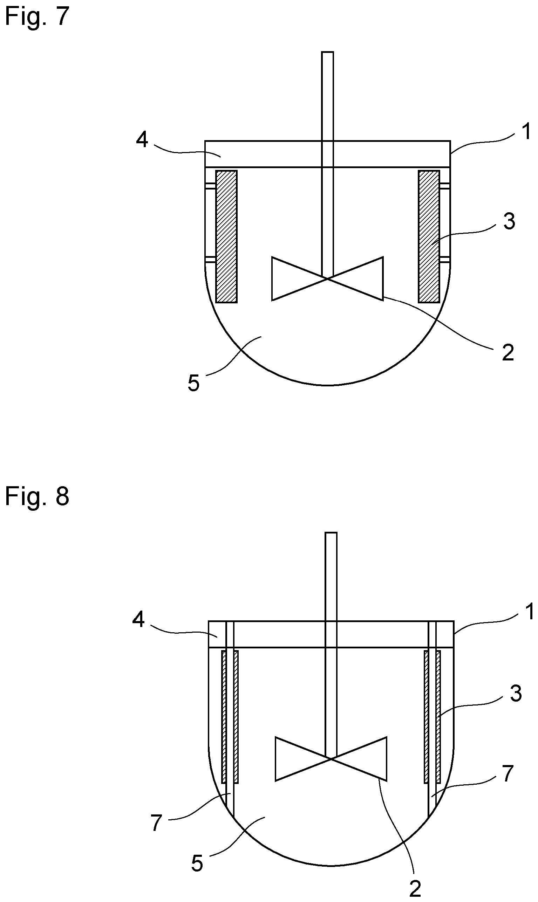

One example of the batch-type reaction device that is used in the method according to the present embodiment is shown in Fig. 7. The stirred tank 1 shown in Fig. 7 has the stirring blade 2, the gas raw material 4, and the liquid raw material 5 in the tank. In addition, on the inner wall side surface of the stirred tank 1, the tubular metal-supported nonwoven fabric catalyst 3 is installed substantially parallel to the shaft of the stirring blade 2. Specifically, the tubular metal-supported nonwoven fabric catalyst 3 is provided substantially parallel to the shaft of the stirring blade 2 in a region between the stirring blade 2 and the inner wall of the stirred tank 1. "Being substantially parallel" indicates a range of an angle at which the tubular metal-supported nonwoven fabric catalyst 3 and the shaft of the stirring blade 2 are parallel to each other ± 5°C. The tubular metal-supported nonwoven fabric catalyst 3 can be made by, for example, winding a plurality of layers of the sheet-like metal-supported nonwoven fabric catalyst 3 around a cylindrical core material. In addition, the sheet-like metal-supported nonwoven fabric catalyst 3 may be rolled into a cylindrical shape without using any core materials. The number of the tubular metal-supported nonwoven fabric catalysts 3 provided in the stirred tank 1 is not particularly limited and can be, for example, two to eight. In a case where a plurality of the tubular metal-supported nonwoven fabric catalysts 3 is provided in the stirred tank 1, the tubular metal-supported nonwoven fabric catalysts 3 can be provided at equal intervals along the inner wall of the stirred tank 1. The tubular metal-supported nonwoven fabric catalyst 3 shown in Fig. 7 is also capable of functioning as the above-described baffle. In Fig. 7, the tubular metal-supported nonwoven fabric catalyst 3 is installed on the inner wall side surface of the stirred tank 1, but the tubular metal-supported nonwoven fabric catalyst 3 may also be inserted into or wound by a plurality of pillars extending upward from the bottom surface of the stirred tank 1.

Another example of the batch-type reaction device that is used in the method according to the present embodiment is shown in Fig. 8. The stirred tank 1 shown in Fig. 8 has the stirring blade 2, the gas raw material 4, and the liquid raw material 5 in the tank. In addition, in the stirred tank 1, large cylindrical frames 7 are disposed substantially parallel to the shaft of the stirring blade 2 in a fixed state. Specifically, the cylindrical frames 7 are provided substantially parallel to the shaft of the stirring blade 2 in regions between the stirring blade 2 and the inner wall of the stirred tank 1. Here, the cylindrical frame 7 positioned on the left side of Fig. 8 and the cylindrical frame 7 positioned on the right side of Fig. 8 exhibit a cross section of the one same large cylindrical frame. That is, one large cylindrical frame 7 is disposed in the stirred tank 1 in a fixed state, and the stirring blade 2 is positioned inside the cylindrical frame 7 (near the central axis). The metal-supported nonwoven fabric catalyst 3 is disposed on the surface of this cylindrical frame 7. That is, the metal-supported nonwoven fabric catalyst 3 is present in a state of being fixed to the inside of the stirred tank 1 in a tubular shape. The metal-supported nonwoven fabric catalyst 3 may be disposed on the inner side surface of the cylindrical frame 7, may be disposed on the outer side surface of the cylindrical frame 7, and may be disposed on both the inner side surface and the outer side surface of the cylindrical frame 7 as shown in Fig. 8. One layer of the metal-supported nonwoven fabric catalyst 3 may be laminated on the surface of the cylindrical frame 7 or two or more layers thereof may be laminated thereon. As a method for providing the metal-supported nonwoven fabric catalyst 3 on the surfaced of the cylindrical frame 7, the same method as in the first embodiment can be used. The inner side portion and outer side portion of the cylindrical frame 7 can be spatially connected to each other to an extent that nonuniformity in the flow and temperature of the solution in the stirred tank 1 are not caused.

### (Eighth embodiment)

In the present embodiment, the batch-type reaction device further has a column connected to the stirred tank, and the column is filled with the metal-supported nonwoven fabric catalyst. The method according to the present embodiment includes a step of flowing the raw materials in the stirred tank through the column and circulating the raw materials back to the stirred tank. In the present embodiment, since the raw materials are flowed through the column filled with the metal-supported nonwoven fabric catalyst, and the raw materials are circulated back to the stirred tank, it is possible to sufficiently bring the metal-supported nonwoven fabric catalyst and the raw material into contact with each other, and separation of the catalyst after the reaction is not necessary.

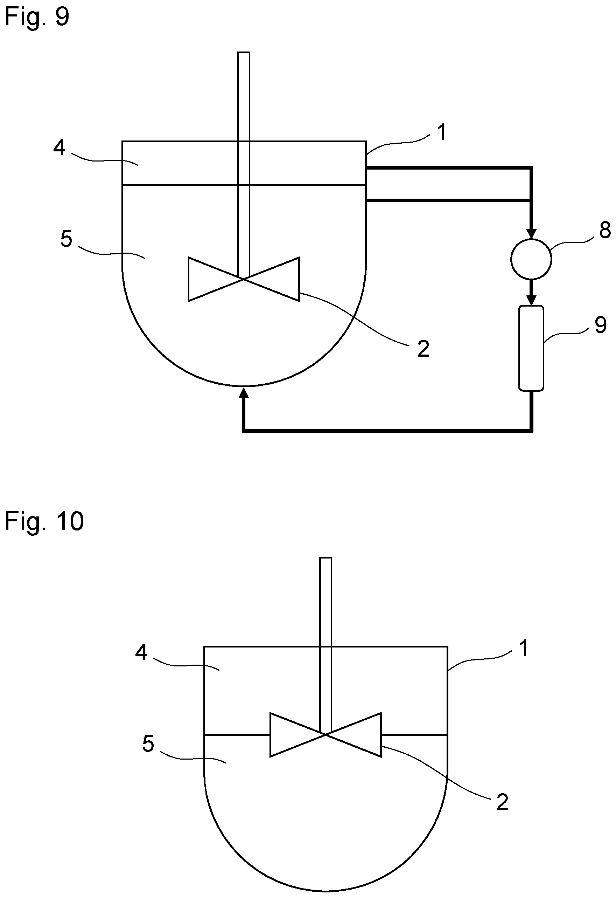

Another example of the batch-type reaction device that is used in the method according to the present embodiment is shown in Fig. 9. The stirred tank 1 shown in Fig. 9 has the stirring blade 2, the gas raw material 4, and the liquid raw material 5 in the tank. In addition, in the stirred tank 1, a pump 8 and a column 9 filled with the metal-supported nonwoven fabric catalyst are connected to each other, and the pump 8 and the column 9 are disposed outside the stirred tank 1. In the batch-type reaction device of Fig. 9, the gas raw material 4 and the liquid raw material 5 in the stirred tank 1 are taken out with the pump 8, flowed through the column 9 disposed downstream of the pump 8, and circulated back to the stirred tank 1. In Fig. 9, the stirred tank 1 has the stirring blade 2 in the tank, but the stirring blade 2 may not be provided.

### (Ninth embodiment)

In the present embodiment, the stirred tank of the batch-type reaction device has a stirring blade in the tank. In addition, the method according to the present embodiment includes a step of rotating the stirring blade with at least a part of the stirring blade in contact with a gas phase containing the gas raw material. One method for efficiently bringing three gas, liquid, and solid components into contact with one another is to generate a large number of microscopic bubbles of gas in liquid by stirring. In the present embodiment, since the stirring blade is rotated with at least a part of the stirring blade in contact with gas containing the gas raw material, that is, with at least a part of the stirring blade above the liquid surface, it is possible to generate a large amount of microscopic bubbles of the gas raw material in liquid. This makes it possible to efficiently bring the gas raw material, the liquid raw material, and the metal-supported nonwoven fabric catalyst into contact with one another and to more efficiently perform the catalytic reaction. The configuration according to the present embodiment can be jointly used in the first to eighth embodiments described above.

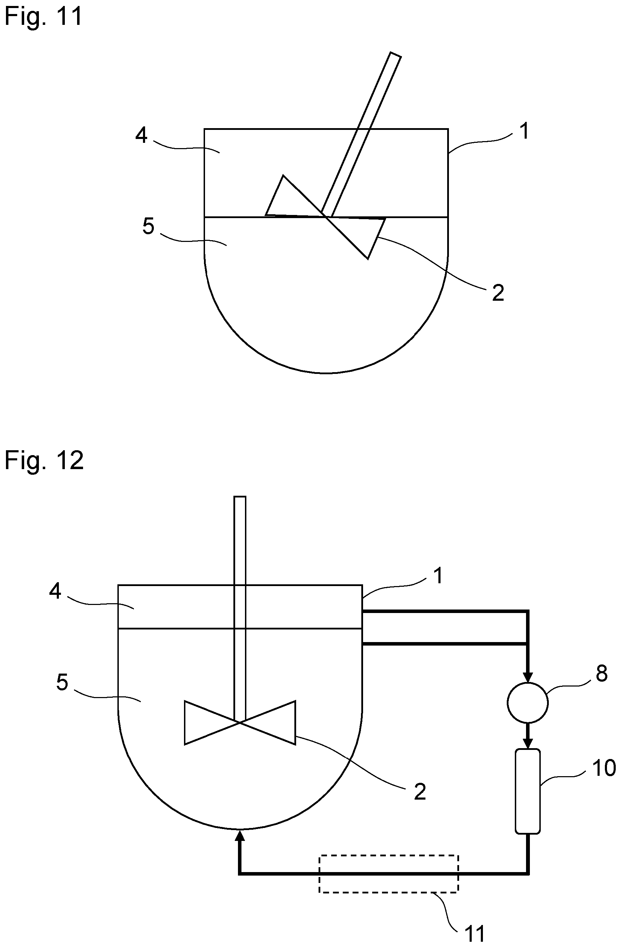

One example of the batch-type reaction device that is used in the method according to the present embodiment is shown in Fig. 10. The stirred tank 1 shown in Fig. 10 has the stirring blade 2, the gas raw material 4, and the liquid raw material 5 in the tank. A part of the stirring blade 2 is above the liquid surface of the liquid raw material 5 and is in contact with the gas raw material 4. Since the stirring blade 2 rotates in this state, microscopic bubbles of the gas raw material 4 are generated in the liquid raw material 5. When the stirring blade 2 is at rest, 10% to 80% of the area of the surface of the stirring blade 2 is preferably in contact with the gas raw material 4, and 20% to 50% of the area is more preferably in contact with the gas raw material 4. In addition, while also depending on the size, shape, or the like of the stirring blade 2, the rotation speed of the stirring blade 2 during stirring can be, for example 60 to 600 rpm. The stirring blade 2 may be installed substantially parallel to the horizontal surface as shown in Fig. 10 and may be in contact with the gas raw material 4, but may be installed in a state of being inclined with respect to the horizontal surface as shown in Fig. 11 and may be in contact with the gas raw material 4.

### (Tenth embodiment)

In the present embodiment, the batch-type reaction device further has an inline mixer connected to the stirred tank. In addition, the method according to the present embodiment includes a step of flowing the gas raw material and the liquid raw material in the stirred tank through the inline mixer, converting the gas raw material into fine bubbles, and circulating the raw materials back to the stirred tank. In the present embodiment, since the gas raw material is converted into fine bubbles in the inline mixer, it is possible to efficiently bring the gas raw material, the liquid raw material, and the metal-supported nonwoven fabric catalyst into contact with one another and to more efficiently perform the catalytic reaction. The configuration according to the present embodiment can be jointly used in the first to ninth embodiments described above.

One example of the batch-type reaction device that is used in the method according to the present embodiment is shown in Fig. 12. The stirred tank 1 shown in Fig. 12 has the stirring blade 2, the gas raw material 4, and the liquid raw material 5 in the tank. In addition, in the stirred tank 1, a pump 8 and an inline mixer 10 are connected to each other, and the pump 8 and the inline mixer 10 are disposed outside the stirred tank 1. In the batch-type reaction device of Fig. 12, the gas raw material 4 and the liquid raw material 5 in the stirred tank 1 are taken out with the pump 8, flowed through the inline mixer 10 disposed downstream of the pump 8, and circulated back to the stirred tank 1. The inline mixer 10 is an inline mixer for fine bubble generation and is capable of converting, for example, the gas raw material 4 to microscopic bubbles having diameters of less than 100 µm. In the present embodiment, the metal-supported nonwoven fabric catalyst is preferably pasted in the inside of a pipe in a downstream region 11 of the inline mixer 10. Since the flow rate is particularly fast in the downstream region 11 of the inline mixer 10, the metal-supported nonwoven fabric catalyst disposed in this region makes it possible to more efficiently bring the microscopic bubbles of the gas raw material 4 into contact with the liquid raw material 5 and the metal-supported nonwoven fabric catalyst. When the metal-supported nonwoven fabric catalyst is pasted such that the inside of the pipe in the downstream region 11 of the inline mixer 10 is blocked, since the pressure loss may increase, it is preferable that the metal-supported nonwoven fabric catalyst is pasted onto the pipe inner wall and the pipe is made hollow to leave a path for the raw materials in the central portion.

### [Reaction device]

A reaction device according to the present embodiment is a batch-type reaction device having a stirred tank, in which a metal-supported nonwoven fabric catalyst is provided on at least a part of the surface of a member provided in the stirred tank. In the reaction device according to the present embodiment, since the metal-supported nonwoven fabric catalyst is provided on the surface of a member in the stirred tank of the batch-type reaction device, it is possible to sufficiently bring the metal-supported nonwoven fabric catalyst and the raw material into contact with each other and to easily separate the catalyst after the reaction. Examples of the member provided in the stirred tank include a stirring blade, a baffle, the inner wall of the stirred tank. As the reaction device according to the present embodiment, for example, the reaction devices in the first to fourth and seventh embodiments described above can be suitably used.

### EXAMPLES

Hereinafter, the present invention will be described in detail by showing examples, but the present invention is not limited to the following description.

### [Example 1]

### (Preparation of palladium-supported nonwoven fabric catalyst)

A nonwoven fabric composed of polyethylene fibers (trade name: OX8901-T6, manufactured by Japan Vilene Company, Ltd., 18 cm × 30 cm, basis weight: 62 g/m²) was irradiated with electron beams (245 keV) (energy imparted: 150 kGy). The nonwoven fabric was immersed in a 30 mass% N-vinyl-2-pyrrolidone aqueous solution and reacted for one hour at 60°C, thereby making a PVP-grafted nonwoven fabric containing 90 parts by mass of N-vinyl-2-pyrrolidone grafted to 100 parts by mass of the nonwoven fabric (grafted side chain: polyvinyl pyrrolidone).

Next, 0.731 g of sodium chloride and 0.4433 g of palladium chloride were dissolved in 250 ml of pure water to prepare a chloropalladic acid aqueous solution. The PVP-grafted nonwoven fabric cut to 300 mm × 200 mm was immersed in the aqueous solution (45 mL), an excess chloropalladic acid aqueous solution was taken out with a drawing machine, and the PVP-grafted nonwoven fabric was dried with a dryer (50°C) for two hours or longer.

The dried nonwoven fabric was put into a 150 × 20 mm glass column in a rolled state, a gas pipe was attached thereto, and hydrogen purging was performed. After the purging, the glass column was sunk in a constant temperature bath warmed to 80°C and warmed for six hours while a hydrogen gas was made to flow at 5 ml/minute (back pressure: 0.05 MPa). After a reduction step ended, the nonwoven fabric was washed with pure water to remove Na ions remaining in the nonwoven fabric and detached palladium, thereby obtaining a palladium-supported nonwoven fabric.

Three 2 cm × 1 cm rectangular fragments (6 cm²) was cut out from the palladium-supported nonwoven fabric thus obtained, and the masses thereof were measured. These were immersed in 1 mol/L nitric acid (25 ml) in an Erlenmeyer flask with a stopper and stirred for 24 hours or longer. This supernatant liquid (500 µl) was diluted 50 times with 0.1 mol/L of nitric acid, and the total was made to be 25 ml. The palladium concentration of this 50-fold diluted solution was measured by ICP-MS. The total amount of palladium leaching from the cut-out nonwoven fabric was calculated from the measurement result and divided by the mass of the nonwoven fabric, thereby determining the palladium content per mass of the nonwoven fabric. The measurement was performed five times, and the average value thereof was regarded as the amount of palladium supported in the palladium-supported nonwoven fabric. As a result, the amount of palladium supported in the palladium-supported nonwoven fabric was 0.56 mass%.

In addition, as a result of observation with SEM (Scanning Electron Microscope) and X-ray analysis performed on the palladium-supported nonwoven fabric, metal nanoparticles (D50: 100 nm or less) of palladium (Pd) attached to the nonwoven fabric were confirmed. Furthermore, as a result of analysis of the bond state by XPS, a peak derived from a metallic bond (zero valent) of palladium was confirmed at 335.4 eV in a photoelectron spectrum. In addition, it was confirmed by observation with TEM/STEM that palladium was supported through a pyrrolidone group of the polyvinyl pyrrolidone, which was the grafted side chain.

### (Hydrogenation of nitrobenzene using palladium-supported nonwoven fabric)

A 2-propanol solution (0.1 mol/l, 150 ml) of nitrobenzene was poured into a three-neck round-bottom reaction flask (300 ml). Thirty two 1 cm × 2 cm rectangular fragments cut out from the palladium-supported nonwoven fabric (64 cm², 660 mg, net Pd content: 3.7 mg) were injected into the reaction flask.

A rubber balloon was attached to a thick-walled rubber tube and fixed with a rubber band, and the rubber ballon was filled with a hydrogen gas (three liters) and swollen. The swollen rubber ballon was attached to a three-way stopcock, and the three-way stopcock was attached to the reaction flask (one side neck of the reaction flask). A stirring blade was set in the central neck of the reaction flask, and a rubber septum was attached to the other side neck of the reaction flask to seal the reaction flask.

The three-way stopcock was connected to a diaphragm pump with the thick-walled rubber tube, and stirring (at 120 rpm) began. The diaphragm pump was turned on to suction the air in the reaction flask. After 30 seconds elapsed from the beginning of the suction, the three-way stopcock was turned, the hydrogen gas was passed from the rubber balloon to the reaction flask to substitute the inside of the reaction flask. The above-described operation of suction and hydrogen substitution was repeated again. The temperature of a reaction solution was made to be 30°C, and a reaction was further begun at a stirring rate of 200 rpm.

The reaction solution was sampled (30 minutes, one hour, three hours, six hours, and 24 hours after the beginning of the reaction) by the following procedure. First, the stirring of the reaction solution was temporarily stopped. Next, the three-way stopcock was put into a blocked state, a syringe was pierced from the rubber septum, and the reaction solution (3 ml) was collected and transferred to a vial bottle. The three-way stopcock was returned to a hydrogen-substituted state, and stirring was resumed.

Five reaction solution samples thus obtained as specimens were analyzed by HPLC, whereby the yields of aniline, which was a target compound, were measured, and changes of the reaction over time were inspected. Agilent 1260 Infinity II was used as an HPLC device, and Agilent Poroshell 120 EC-C18 (particle diameter: 2.7 µm, ϕ3 × 150 mm) was used as a column. Ammonium acetate aqueous solution-acetonitrile system was used as a mobile phase (flow rate: 0.5 ml/min). The yields were calculated from peak areas based on calibration curves of nitrobenzene and aniline created in advance. The results are shown in Table 1.

The palladium-supported nonwoven fabric was taken out from a reaction mixture reacted for 24 hours. A time taken to take out the palladium-supported nonwoven fabric was five minutes or shorter, and it was possible to easily separate the palladium-supported nonwoven fabric from the reaction mixture within a short period of time. The obtained reaction mixture (135 ml) was a solid-free transparent liquid.

The reaction mixture was introduced into a rotary evaporator as it was, and 2-propanol was distilled away, thereby obtaining 12.4 g of aniline (13.3 mmol, isolated yield: 98.5%), which was the target compound. As a result of inspecting the 1H-NMR spectrum of the obtained residues (solvent: deuterated chloroform), -NH₂ (δ3.61 ppm, 2H), position 2 and position 6 (δ6.67 ppm, 2H) of a benzene ring, position 4 (δ6.75 ppm, 1H) of the benzene ring, and position 3 and position 5 (δ7.14 ppm, 2H) of the benzene ring were observed, and it was possible to confirm that a product was aniline.

### [Comparative Example 1]

### (Preparation of palladium on activated carbon)

As a hydrogenation catalyst, fine powdery palladium on activated carbon (10% Pd) (manufactured by FUJIFILM Wako Pure Chemical Corporation) was prepared.

### (Hydrogenation of nitrobenzene using palladium on activated carbon)

A 2-propanol solution (0.1 mol/l, 150 ml) of nitrobenzene was poured into a three-neck round-bottom reaction flask (300 ml). The palladium on activated carbon (10% Pd, 38 mg, net Pd content: 3.8 mg) was injected into the reaction flask.

A rubber ballon filled with a hydrogen gas (three liters), a three-way stopcock, and a rubber septum were attached to the reaction flask in the same manner as in Example 1. Furthermore, the inside of the reaction flask was substituted with hydrogen in the same manner as in Example 1 and stirred at 200 rpm to begin a reaction.

The reaction solution was sampled a total of five times (30 minutes, one hour, three hours, six hours, and 24 hours after the beginning of the reaction) in the same manner as in Example 1. As a procedure, the stirring of the reaction solution was temporarily stopped, and the reaction solution was left to stand for approximately five minutes to wait a supernatant liquid of the reaction solution in suspension became transparent to some extent. Next, the three-way stopcock was put into a blocked state, a syringe was pierced from the rubber septum, and the reaction solution (3 ml) was collected and transferred to a vial bottle. The collected reaction solution was still in suspension and thus filtered using a filter (Millex-HPF Filter, 0.45 µm) and a syringe. In this filtration operation, approximately 10 minutes was necessary per sample.

Five reaction solution samples obtained as specimens were analyzed by HPLC in the same manner as in Example 1, whereby the yields of aniline, which was a target compound, were measured, and changes of the reaction over time were inspected. The results are shown in Table 1.

A reaction mixture (135 ml) reacted for 24 hours was a suspension containing a fine palladium on activated carbon powder and thus filtered using a glass filter with a Celite bed, thereby obtaining a transparent liquid. Approximately 20 minutes was necessary for this filtration operation. In addition, Celite to which palladium on activated carbon had been attached was generated as waste at this time. It is also possible to use a filter (Millex-HPF Filter, 0.45 µm) at the time of the filtration to prevent the generation of Celite waste, but a longer time is taken in this method, and a filter to which palladium on activated carbon has been attached is thus generated.

The liquid was introduced into a rotary evaporator, and 2-propanol was distilled away, thereby obtaining 11.8 g of aniline (12.7 mmol, isolated yield: 94.1%), which was the target compound.

**[Table 1]**

| Table 1 Nitrobenzene hydrogenation and aniline yield transition(%) | | | | | | |
|---|---|---|---|---|---|---|
| Reaction time | At the start | 30 minutes | One hour | Three hours | Six hours | 24 hours |
| Example 1 | 0 | 21.4 | 40.3 | 100 | 100 | 100 |
| Comparative Example 1 | 0 | 22.8 | 44.4 | 100 | 100 | 100 |

As shown in Table 1, in Example 1 where the palladium-supported nonwoven fabric according to the present embodiment was used, the obtained hydrogenation reaction rate was equivalent to that in Comparative Example 1 where palladium on activated carbon (10% Pd) having the same net Pd content was used. Furthermore, in Example 1, after the end of the reaction, the palladium-supported nonwoven fabric was washed with 2-propanol and wiped off, and the hydrogenation reaction of nitrobenzene was then performed under the same conditions. As a result, after 24 hours, the yields of aniline obtained were almost 100% even in the second sampling and in the third sampling as in the first sampling. From this fact, it was confirmed that the palladium-supported nonwoven fabric of the present embodiment can be reused many times. On the other hand, in the palladium on activated carbon of Comparative Example 1, since some palladium leached into the reaction solution, it was not possible to easily recover the palladium that had leached, and since palladium on activated carbon was recovered as a mixture with a filter material by the filtration, the reuse thereof was difficult.

### REFERENCE SIGNS LIST

- 1: Stirred tank
- 2: Stirring blade
- 3: Metal-supported nonwoven fabric catalyst
- 4: Gas raw material
- 5: Liquid raw material
- 6: Baffle
- 7: Cylindrical frame
- 8: Pump
- 9: Column
- 10: Inline mixer
- 11: Downstream region of inline mixer

## Claims

1. A reaction method comprising a step of reacting two or more kinds of raw materials with a metal-supported nonwoven fabric catalyst using a batch-type reaction device having a stirred tank.

2. The method according to claim 1, wherein the metal-supported nonwoven fabric catalyst comprises a nonwoven fabric including polyolefin fibers or PET fibers and metal particles,
the nonwoven fabric has a grafted side chain bonded thereto, the grafted side chain composed of polyvinyl pyrrolidone, a polyacrylic acid, or a polymer having a functional group having an unshared electron pair and
the metal particles are supported on the grafted side chain through a pyrrolidone group of the polyvinyl pyrrolidone, a carboxy group of the polyacrylic acid, or the functional group having an unshared electron pair.

3. The method according to claim 2, wherein a metal of the metal particles is Pd, Pt, Au, Ag, Rh, Ru, Ir, Os, Cu, Ni, or an alloy containing at least one of these metals.

4. The method according to claim 2 or 3, wherein the functional group having an unshared electron pair is an amino group, a carboxy group, or a hydroxy group.

5. The method according to any one of claims 1 to 4, wherein the metal-supported nonwoven fabric catalyst is present in a fragment shape without being fixed to an inside of the stirred tank.

6. The method according to any one of claims 1 to 4, wherein the stirred tank has a stirring blade in the tank, and the metal-supported nonwoven fabric catalyst is provided on at least a part of a surface of the stirring blade.

7. The method according to any one of claims 1 to 4, wherein the stirred tank has a stirring blade in the tank, and the stirring blade is composed of the metal-supported nonwoven fabric catalyst.

8. The method according to any one of claims 1 to 4, wherein the stirred tank has a baffle in the tank, and the metal-supported nonwoven fabric catalyst is provided on at least a part of a surface of the baffle.

9. The method according to any one of claims 1 to 4, wherein the metal-supported nonwoven fabric catalyst is provided on at least a part of an inner wall surface of the stirred tank.

10. The method according to any one of claims 1 to 4, wherein the metal-supported nonwoven fabric catalyst is present in a spherical or tubular shape without being fixed to an inside of the stirred tank.

11. The method according to any one of claims 1 to 4, wherein the metal-supported nonwoven fabric catalyst is present in a state of being fixed to an inside of the stirred tank in a tubular shape.

12. The method according to any one of claims 1 to 4, wherein the batch-type reaction device further has a column connected to the stirred tank,
the column is filled with the metal-supported nonwoven fabric catalyst, and
the method comprises a step of flowing the raw materials in the stirred tank through the column and circulating the raw materials back to the stirred tank.

13. The method according to any one of claims 1 to 12, wherein the two or more kinds of raw materials contain a gas raw material and a liquid raw material.

14. The method according to claim 13, wherein the gas raw material contains hydrogen.

15. The method according to claim 14, wherein the liquid raw material contains at least one selected from the group consisting of an unsaturated compound, an azide compound, a nitro compound, a carbonyl compound, a halogen compound, an amine protected with a benzyloxycarbonyl group, an alcohol protected with a benzyloxycarbonyl group, a phenol compound protected with a benzyloxycarbonyl group, a benzyl ester, an amine protected with a benzyl group, an alcohol protected with a benzyl group, a phenol compound protected with a benzyl group, and an epoxide.

16. The method according to claim 13, wherein the gas raw material contains oxygen.

17. The method according to claim 16, wherein the liquid raw material contains at least one selected from the group consisting of an unsaturated compound, an alcohol and an aldehyde.

18. The method according to any one of claims 13 to 17, wherein the stirred tank has a stirring blade in the tank, and
the method comprises a step of rotating the stirring blade with at least a part of the stirring blade in contact with a gas phase containing the gas raw material.

19. The method according to any one of claims 13 to 18, wherein the batch-type reaction device further has an inline mixer connected to the stirred tank, and
the method comprises a step of flowing the gas raw material and the liquid raw material in the stirred tank through the inline mixer, converting the gas raw material into fine bubbles, and circulating the raw materials back to the stirred tank.

20. A batch-type reaction device having a stirred tank, wherein a metal-supported nonwoven fabric catalyst is provided on at least a part of a surface of a member provided in the stirred tank.
